Europäisches Patentamt

European Patent Office

Office européen des brevets

(11) Numéro de publication: **0 416 981 A1**

## (12) DEMANDE DE BREVET EUROPEEN

(21) Numéro de dépôt: 90402391.8

(22) Date de dépôt: 29.08.90

(51) Int. Cl.⁵: **B62D 7/20**

(30) Priorité: 08.09.89 FR 8911788

(43) Date de publication de la demande:
13.03.91 Bulletin 91/11

(84) Etats contractants désignés:
DE ES GB IT

(71) Demandeur: **AUTOMOBILES PEUGEOT**
**75, avenue de la Grande Armée**
**F-75116 Paris(FR)**

Demandeur: **AUTOMOBILES CITROEN**
**62 Boulevard Victor-Hugo**
**F-92200 Neuilly-sur-Seine(FR)**

(72) Inventeur: **Pelin, Antonin**
**6 Impasse des Mésanges**
**F-25700 Valentigney(FR)**

(74) Mandataire: **Durand, Yves Armand Louis et al**
**CABINET WEINSTEIN 20, Avenue de**
**Friedland**
**F-75008 Paris(FR)**

(54) **Biellette réglable, en particulier pour la tringlerie de direction d'une automobile.**

(57) Cette invention a pour objet des biellettes réglables.

Cette biellette est formée de deux tronçons (1,
2) de biellette fixés l'un à l'autre par deux éléments
filetés (7, 11) traversant ces deux tronçons en passant dans une lumière (14, 15) ménagée dans l'un
des tronçons (2), tandis que l'un des éléments filetés (7) porte une came circulaire (20) excentrée logée
dans une rainure transversale (5) pratiquée dans le
tronçon (2) comportant la lumière (14).

Cette biellette s'applique, par exemple, à des
tringleries de la direction de véhicules automobiles.

Fig. 4

**BIELLETTE RÉGLABLE, EN PARTICULIER POUR LA TRINGLERIE DE DIRECTION D'UNE AUTOMOBILE.**

La présente invention a essentiellement pour objet une biellette réglable destinée en particulier à équiper la tringlerie de direction d'un véhicule automobile.

On connaît déjà des fixations ajustables de joint à rotule sur bielle de tringlerie de direction où les boîtes à rotule sont munies de queues qui sont vissées aux extrémités à des éléments de liaison de bielles de direction et qui sont immobilisées en rotation par des contre-écrous ou par des colliers de serrage.

Toutefois ces techniques ne peuvent pas être utilisées avec des tronçons de bielle en profilés en U, peu coûteux, et ne permettent un réglage précis de la longueur de la bielle que si le tronçon de bielle comporte à ses deux extrémités des moyens de liaison à filetages opposés.

D'autre part, on connaît par exemple d'après le document US-A-3 782 221 une biellette réglable comprenant essentiellement deux tronçons de biellette fixés l'un à l'autre par deux éléments filetés traversant les deux tronçons en passant au travers d'une lumière ménagée dans ces tronçons. Toutefois, les tronçons fixés par simple boulonnage ne permettent pas de conserver l'intégrité du réglage lors du serrage et ne permettent donc pas l'automatisation du serrage et du réglage.

Aussi la présente invention a pour but de remédier à tous les inconvénients ci-dessus en proposant une biellette réglable aisée à monter et à utiliser et qui surtout permet un assemblage et un réglage précis et facilement automatisables des tronçons composant cette biellette.

A cet effet la présente invention a pour objet une biellette réglable, en particulier pour la tringlerie de direction d'un véhicule automobile et du type comprenant au moins deux tronçons de biellette fixés l'un à l'autre par deux éléments filetés traversant les deux tronçons en passant au travers d'une lumière ménagée dans l'un des tronçons, caractérisée en ce que la tige de l'un des éléments filetés porte une came circulaire excentrée logée dans une rainure transversale pratiquée, dans le tronçon comportant la lumière que traverse la tige, à l'une des extrémités débouchantes de ladite lumière.

Suivant une autre caractéristique de cette invention l'un des tronçons de la biellette présente une section transversale en U et enserre l'autre tronçon qui comporte la lumière précitée et qui présente une section transversale sensiblement rectangulaire.

Selon encore une autre caractéristique de cette invention, la biellette en question se caractérise en ce que le tronçon de biellette de section transversale sensiblement rectangulaire forme une seule pièce avec un boîtier d'articulation à rotule.

Suivant une réalisation préférée, la came circulaire excentrée est rapportée sur la tige de l'élément fileté par emmanchement sur une portion non circulaire de cette tige.

On précisera encore ici que le tronçon de biellette de section sensiblement rectangulaire comporte deux lumières respectivement traversées par les deux éléments filetés.

Cette biellette est encore caractérisée en ce que sur chaque élément fileté peut être monté un écrou permettant la fixation des deux tronçons de biellette l'un avec l'autre et l'élément fileté portant la came circulaire excentrée est muni, à son extrémité de vissage de l'écrou, d'un embout non circulaire pour assurer l'entraînement en rotation de cet élément fileté par un outil.

Suivant encore une autre caractéristique de l'invention, la rainure transversale pratiquée dans le tronçon de biellette sensiblement rectangulaire présente une section transversale également rectangulaire.

Mais d'autres caractéristiques et avantages de l'invention apparaîtront plus clairement dans la description détaillée qui suit et qui se réfère aux dessins annexés donnés uniquement à titre d'exemple et dans lesquels .

La figure 1 est une vue éclatée et en perspective de deux tronçons de biellette avant montage au moyen d'éléments filetés, dont un seul est représenté.

La figure 2 est une vue similaire à la figure 1 mais montre un autre mode de réalisation de biellette selon cette invention avec un élément fileté différent.

La figure 3 est une vue en plan d'une came circulaire insérable sur l'élément fileté montré à la figure 2.

La figure 4 illustre partiellement en coupe les deux tronçons de biellette de la figure 1 en position assemblée à l'aide de deux éléments filetés.

Les figures 5 et 6 sont des vues en coupe suivant respectivement les lignes V-V et VI-VI de la figure 4.

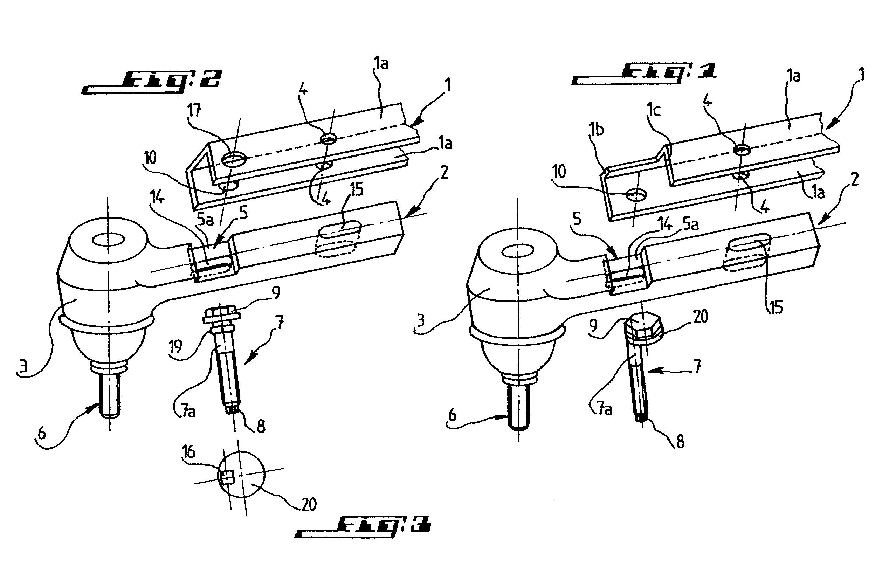

On voit sur les figures 1, 2 et 4 une biellette pouvant appartenir à la tringlerie de direction d'une véhicule automobile et se composant essentiellement de deux tronçons 1, 2 fixés l'un à l'autre par deux éléments filetés 7 et 11.

Conformément à l'invention, l'élément fileté 7 est constitué par une tige filetée 7a qui porte une came circulaire excentrée 20 qui se loge dans une rainure transversale 5 pratiquée dans le tronçon de biellette 2 et ayant la même largeur que la rainure 5.

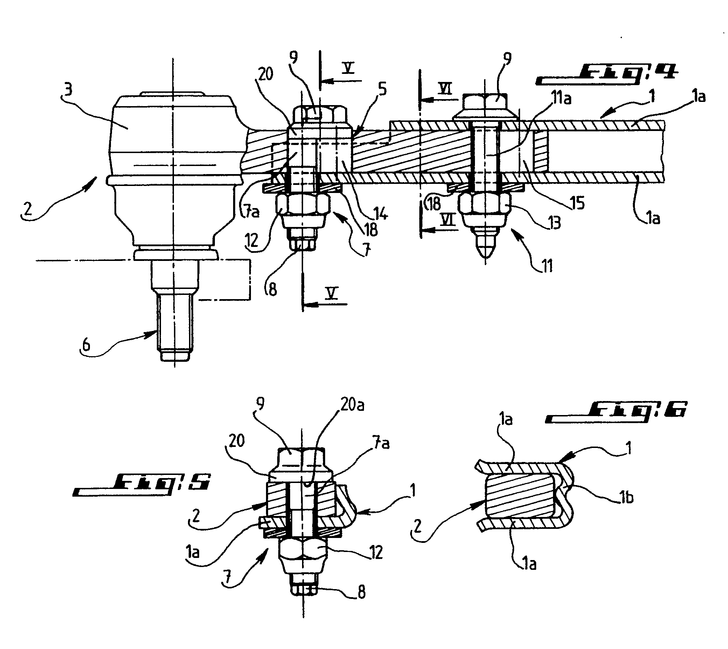

Comme on le voit bien sur les figures 1 et 2, la rainure 5 présente une section transversale rectangulaire et est pratiquée dans l'une des faces du tronçon 2 qui présente une section transversale sensiblement rectangulaire, tandis que le tronçon 1 est constitué par un profilé en forme transversale de U.

Une lumière 14 traverse le tronçon de biellette 2 de façon à déboucher dans le fond 5a de la rainure 5, et l'élément fileté 7 traverse cette lumière pour réaliser l'assemblage des tronçons 1 et 2 comme on le décrira en détail plus loin. Cette lumière 14 est de forme oblongue pour permettre un déplacement de la tige filetée 7a à l'intérieur de celle-ci lors du réglage.

L'élément fileté 7 comporte à l'une de ses extrémités, à savoir son extrémité filetée, un embout non circulaire 8 actionnable par un outil (non représenté). A son autre extrémité, l'élément fileté 7 possède une tête hexagonale 9.

On a montré en 11 sur la figure 4 seulement, un deuxième élément fileté qui participe à l'assemblage des tronçons 1 et 2.

Cet élément fileté 11 traverse, pour assembler les tronçons 1 et 2, le tronçon de biellette 2 en passant à travers une lumière 15, espacée de la lumière 14 et également de forme oblongue.

Comme il est montré à la figure 6, le tronçon de biellette 1 ou profilé en U est monté par emboîtement de ses deux ailes 1a sur le tronçon de biellette 2 de section sensiblement rectangulaire.

Afin de permettre le passage de l'élément fileté 11 à travers les tronçons 1 et 2, les ailes 1a du tronçon de biellette 1 sont dotées de perçages alignés 4. Ces deux perçages 4 sont bien visibles sur les figures 1 et 2.

Comme on le voit bien sur les figures 1, 2 et 4, une boîte à rotule 3 est associée au tronçon de biellette 2 pour ne former qu'une seule pièce avec lui.

On a montré en 6 un axe de rotule faisant saillie de la boîte 3 et servant d'élément de liaison avec, par exemple, d'autres pièces de la tringlerie de direction du véhicule automobile.

Selon le mode de réalisation visible sur les figures 1, 4 et 5, la came circulaire 20 est intégrée à l'élément fileté 7 et, plus précisément fait partie de la tête hexagonale 9 comme on le voit bien sur la figure 5.

Il apparaît clairement sur la figure 1 que la tige filetée 7a de l'élément fileté 7 est solidaire, de façon excentrée, de l'ensemble tête hexagonale 9-came circulaire 20.

On voit encore sur cette figure que l'une des ailes 1a du tronçon de biellette 1 en U, et une partie de la base 1b du U du profilé comporte une découpe 1c, de sorte qu'après emboîtement du tronçon 1 sur le tronçon 2, l'élément fileté 7 puisse être introduit dans la lumière 14 comme on le voit sur la figure 4, étant entendu que la tige filetée 7a de l'élément fileté 7 traverse un perçage circulaire 10 ménagé dans l'aile 1a du tronçon 1 qui ne comporte pas la découpe 1c.

Lors du montage tel que l'on peut le voir sur la figure 4, l'élément fileté 7 traverse donc le tronçon 2 par sa lumière 14 et le tronçon 1 par son perçage circulaire 10. La face 20a de la came 20, opposée à la tête hexagonale 9 vient alors en appui sur le fond 5a de la rainure 5.

Selon le mode de réalisation visible aux figures 2 et 3, l'élément fileté 7 comporte une partie 19 de section non circulaire. Cette partie 19 de section non circulaire, par exemple carrée, est prévue pour recevoir et pour solidariser en rotation avec l'élément fileté 7 une came circulaire 20, montrée sur la figure 3 et dont l'épaisseur est sensiblement égale à la hauteur de la rainure 5.

Cette came 20, indépendante de l'élément fileté 7, comporte un orifice excentré 16 non circulaire, par exemple carré, pouvant être emmanché sur la partie 19 non circulaire, de section identique à la section de l'orifice 16. En variante, la partie 19 de la tige est circulaire et moletée, et l'orifice 16 est circulaire et lisse, emmanché à force sur la partie 19.

Grâce à la prévision d'une telle came 20 indépendante, la découpe d'une aile 1a du tronçon de biellette 1 n'est plus nécessaire pour l'assemblage des deux tronçons de biellette.

En effet, dans ce cas, la came 20 sera introduite dans la rainure transversale 5, puis, après emboîtement du tronçon 1 sur le tronçon 2, l'élément fileté 7 passera successivement à travers un perçage 17 de l'une des ailes 1a du tronçon de biellette 1, à travers la lumière 14, et à travers le perçage 10 dans l'autre aile 1a du tronçon 1.

Selon ce mode de réalisation les pièces identiques ou similaires à celles du mode de réalisation décrit précédemment et visible sur les figures 1, 4 et 5 portent les mêmes références numériques et ne nécessitent pas d'être décrites à nouveau.

On remarquera que le mode de réalisation qui vient d'être décrit permet d'aboutir à une biellette réglable de rigidité accrue par rapport au mode de réalisation de la figure 1.

Mais pour une meilleure compréhension de l'invention, on expliquera ci-après le montage et la manière dont s'effectue le réglage des deux tronçons de biellette selon cette invention.

L'assemblage pour réaliser la biellette selon le mode de réalisation illustré sur les figures 1, 4 et 5, s'effectue en introduisant dans la partie intérieure du U du tronçon de biellette 1 la partie sensiblement rectangulaire du tronçon de biellette 2 jusqu'à ce que les lumières 14 et 15 du tronçon 2 coïncident avec les perçages 4 et 10 sur les ailes 1a du tronçon de biellette 1.

Les éléments filetés 7 et 11 peuvent alors traverser respectivement les perçages 10 et 4 et les lumières 14 et 15.

Ensuite, à l'aide d'un outil approprié, tel qu'une clé, on agit sur l'embout 8 ou la tête héxagonale 9 pour entraîner en rotation dans un sens ou dans l'autre l'élément fileté 7 afin de régler la longueur de la biellette. Plus précisément, la came 20 agissant sur les parois latérales de la rainure transversale 5 permettra l'ajustage d'un tronçon de biellette par rapport à l'autre pour aboutir à la longueur de biellette désirée.

On remarquera ici que lors du réglage, la tige 7a de l'élément fileté 7, de même que la tige 11a de l'élément fileté 11 pourront se déplacer respectivement dans les lumières 14 et 15 en forme de trous oblongs.

Le réglage étant effectué, il suffit alors de serrer les tronçons 1 et 2 par vissage d'un écrou 12, 13 sur respectivement les éléments filetés 7 et 11, en prévoyant éventuellement une rondelle 18, comme on le voit bien sur la figure 4.

Le montage de la biellette réglable visible sur la figure 2 est sensiblement le même que celui de la figure 1.

Cependant, comme on l'a expliqué précédemment, on introduit ici d'abord la came circulaire 20 dans la rainure transversale 5 du tronçon de biellette 2 avant l'emboîtement des deux tronçons 1 et 2. Après cet emboîtement, l'élément fileté 7 est passé à travers le perçage 17, de manière à ce que la partie 19 de la tige filetée 7a s'encastre dans l'orifice 16 de la came 20 préalablement logée dans la rainure 5 du tronçon de biellette 2.

Là encore, à l'aide d'un outil approprié, on fait tourner la tige 7a par son embout 8 ou sa tête héxagonale 9 pour obtenir la longueur de biellette désirée et on effectue le serrage à l'aide d'écrous non représentés sur la figure 2 et que l'on visse tant sur l'élément fileté 7 que sur l'élément fileté 11 non représenté sur cette figure 2.

On a donc réalisé suivant l'invention une biellette réglable de conception mécanique simple et de réalisation peu coûteuse présentant une excellente fiabilité de réglage et pouvant être montée automatiquement à l'aide de robots.

En outre, ce type de biellette réglable permet d'obtenir un réglage très précis et durable de la longueur de la biellette et pouvant aussi être exécuté de façon aisée et avec un outillage classique, par exemple lors d'une révision mécanique du véhicule.

D'autre part, le coût de production des tronçons peut être considérablement réduit grâce à l'utilisation d'un profilé en forme de U tout en gardant les qualités mécaniques nécessaires au bon fonctionnement du mécanisme telles que, par exemple, la rigidité de l'ensemble.

Bien entendu cette invention n'est nullement limitée aux modes de réalisation décrits et illustrés qui n'ont été donnés qu'à titre d'exemples.

C'est ainsi que la forme et les dimensions des deux tronçons de biellette et des trous oblongs pratiqués dans l'un des tronçons peuvent être modifiés sans sortir du cadre de l'invention.

Cette invention comprend donc tous les équivalents techniques des moyens décrits ainsi que leurs combinaisons, si celles-ci sont effectuées selon son esprit.

## Revendications

1. Biellette réglable, en particulier pour la tringlerie de direction d'un véhicule automobile, et du type comprenant au moins deux tronçons (1, 2) de biellette fixés l'un à l'autre par deux éléments filetés (7, 11) traversant les deux tronçons en passant au travers une lumière (14, 15) ménagée dans l'un de ces tronçons (2), caractérisée en ce que la tige (7a) de l'un des éléments filetés (7) porte une came (20) circulaire excentrée logée dans une rainure transversale (5) pratiquée dans le tronçon (2) comportant la lumière (14) que tranverse cette tige (7a) à l'une des extrémités débouchantes de ladite lumière (14).

2. Biellette selon la revendication 1, caractérisée en ce que l'un des tronçons (1) présente une section transversale en U et enserre l'autre tronçon (2) qui comporte la lumière (14) précitée et qui présente une section transversale sensiblement rectangulaire.

3. Biellette selon la revendication 1 ou 2, caractérisée en ce que le tronçon (2) précité de section transversale sensiblement rectangulaire forme une seule pièce avec un boîtier d'articulation à rotule (3a).

4. Biellette selon l'une des revendications 1 à 3 caractérisée en ce que la came circulaire (20) est rapportée sur la tige (7a) de l'élément fileté (7) par emmanchement sur une portion non circulaire (19) de cette tige (7a).

5. Biellette selon l'une des revendications 1 à 4, caractérisée en ce que le tronçon de biellette 2 de section sensiblement rectangulaire comporte deux lumières (14, 15) respectivement traversées par les deux éléments filetés (7, 11).

6. Biellette selon l'une des revendications de 1 à 5, caractérisée en ce que sur chaque élément fileté (7, 11) peut être monté un écrou (12, 13) permettant la fixation des deux tronçons de bielette (1, 2) l'un avec l'autre, et l'élément fileté (7) portant la came circulaire (20) excentrée est muni, à son extrémité de vissage de l'écrou (12), d'un embout (8) non circulaire pour assurer l'entraînement en rotation de cet élément fileté (7) par un outil.

7. Biellette selon l'une des revendications de 1 à 6, caractérisée en ce que la rainure transversale (5) précitée présente une section transversale rectangulaire.

Fig. 1

Fig. 2

Fig. 4

Fig. 5

Fig. 6

EP 0 416 981 A1

**Office européen
des brevets**

**RAPPORT DE RECHERCHE
EUROPEENNE**

Numéro de la demande

**EP 90 40 2391**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | US-A-3 782 221  (NALODKA ET AL)<br>* le document en entier * | 1,5,6 | B 62 D 7/20 |
| A | EP-A-0 317 734  (TRW EHRENREICH)<br>* abrégé; figures 1-4 * | 2,3 | |
| A | US-A-4 786 204  (MAYEDA)<br>* abrégé; figures 3, 4, 6 * | 1 | |
| A | EP-A-0 306 626  (BAYERISCHE MOTOREN WERKE)<br>* abrégé; revendication 1; figures 3, 4, 6, 10 * | 1 | |
| A | US-A-4 854 114  (SPECK)<br>* abrégé; figures 3-5, 8 * | 1,5,6 | |

**DOMAINES TECHNIQUES
RECHERCHES (Int. Cl.5)**

B 62 D
F 16 C
E 04 F
F 16 B

Le présent rapport de recherche a été établi pour toutes les revendications

| Lieu de la recherche | Date d'achèvement de la recherche | Examinateur |
|---|---|---|
| La Haye | 30 novembre 90 | MYON G.J-P. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons

& : membre de la même famille, document
    correspondant